# EUROPEAN PATENT SPECIFICATION

(11) **EP 1 481 849 B1**
(45) Date of publication and mention of the grant of the patent: **14.02.2007**
(21) Application number: 03398004.6
(22) Date of filing: 30.05.2003
(51) Int. Cl.: B60Q 7/00

(54) **Foldable warning triangle**
Einklappbares Warndreieck
Triangle de signalisation pliable

(43) Date of publication of application: 01.12.2004
(73) Proprietor: Monte Meao Componentes Auto S.A., 3720 Oliveira De Azemeis (PT)
(72) Inventor: Rodrigues Lello, José Luis, 4150-170 Porto (PT); de Magalhães Cerqueira, Fernando António, 4430-207 Vila Nova de Gaia (PT); Galizia Carneiro Barral, José Manuel, 4470-147 Maia (PT)
(74) Representative: Beck, Michael Rudolf

(56) References cited:
- EP-A- 0 078 520
- DE-U- 20 001 230
- DE-U- 20 001 925
- DE-U- 20 017 169
- DE-U- 20 201 661
- US-A- 4 288 052

## Description

The invention relates to a foldable warning triangle according to the preamble portion of claim 1. Warning triangles generally comprise a reflector arrangement of three panels and a stand for supporting the reflector arrangement on the ground.

According to regulation no. 27.03 of the European Union, a warning triangle for a motor car has to provide certain stability with respect to its use. More specifically, the triangle must stay still in a wind tunnel at a wind velocity of 60 km/h. Further, its maximum displacement in vertical direction has to be less than 50 mm under a load of 200 g. There are also minimum requirements for the size of the unfolded triangle.

Conventional warning triangles meet these criteria by using a heavy stand to give weight to the triangle. The stand usually comprises a rigid horizontal base plate made of metal and carrying the reflector arrangement. The reflector arrangement is held in slots of the base plate which function as joints so that the reflector arrangement may pivot to a certain degree about a substantially horizontal axis in order to compensate gusts of wind. Further, the stand is provided with four legs spreading out in two pairs from end portions of the rigid base plate below the corners of the reflector arrangement. In an unfolded state, the legs and base plate form a H-shaped structure with the legs extending on either side of the triangle and being inclined towards the ground. Thus, the technical concept of this prior art construction resides in the idea of providing a heavy and rigid stand, having a centre of gravity that is sufficiently low with regard to the spreading legs to avoid any significant displacement of the triangle under the above-mentioned conditions. A warning triangle of this type is disclosed in EP 0 819 577 A2.

Even though the prior art warning triangle provides good stability, it is relatively heavy in weight. As in many countries a warning triangle is to be kept in every passenger vehicle in order to have it on hand in the event of a breakdown of the vehicle, it is desired that the warning triangle be of a lightweight construction. It is also desired that the triangle can be folded very compactly, and requires little storage space.

A warning triangle according to the preamble portion of claim 1 is known from DE 200 17 169 U1. In this triangle the reflector is pivotally connected to the stand through a joint constituted by a rubber element. Vertical movement of the top of the triangle results from sideward bending in the rubber joint or bending of the legs.

Another warning triangle is known form DE 200 01 230 U.

The present invention aims at providing a lightweight warning triangle, which has sufficient stability and requires little space in its folded state.

The invention provides a foldable warning triangle, comprising the features of claim 1.
In contrast to the prior art warning triangle of EP 0 819 577 A2, the inventive warning triangle does not require a heavy, rigid base plate. Sufficient stability and flexibility is obtained by the stand, which provides a spring effect. Accordingly, the warning triangle according to the invention has low weight and at the same time enough flexibility to successfully perform a wind test and a load test under the above-mentioned conditions. In fact, the inventive triangle is able to stand still for wind velocities up to 70 km/h.

Vertically elastic means in the form of a wire bracket provide additional elasticity in vertical direction.

The wire bracket may be fixed to the reflector arrangement at the joints of the base panel and supports the two pairs of legs, which results in a warning triangle, that can be manufactured in a very cost efficient manner.

According to a further preferred embodiment of the invention the wire bracket comprises two separate wire elements. These wire elements are connected with each other by means of a coupling element while the coupling element is supported on the base panel of the reflector arrangement.

The coupling element may comprise two openings at its lower side for receiving upwardly bent portions of the two wire elements, respectively.

According to another preferred embodiment, the coupling element or spacer is provided with recesses for retaining the folded legs spaced apart from each other. Thus, the coupling element or spacer provides a second function in addition to providing a flexible connection between the wire bracket and the reflector arrangement, namely preventing the folded legs from rattling during transport.

In order to efficiently connect the stand to the reflector arrangement the wire bracket is formed with two upwardly bent end portions, which are secured between two panels, respectively, at the joints of these panels. This enables the wire bracket to be easily mounted on the base panel of the reflector arrangement.

Preferably, the end portions of the wire bracket are secured without play between the panels so that the reflector arrangement is stably held on the wire bracket. Of course, the upwardly bent end portions also provide a spring effect allowing the triangle to bend backwards and forwards under a wind load. Thus, the whole structure of the triangle has a continuous flexibility without play from ground to top.

According to another preferred embodiment of the invention the base panel of the reflector arrangement is provided with receptacles in the vicinity of its joints for clamping L-shaped arms of the end portions of the wire bracket. By this, the wire bracket can be assembled on the base panel without the use of special tools. It is also possible, to assemble both elements in an automated procedure. Because of their L-shape the end portions are easily pressed in intersecting channels, which are preferably located around a pin or protrusion of the corresponding joint on the base panel.

Further, the legs may be fixed on the wire bracket through two leg holders. Each leg holder is spaced apart from the base panel of the reflector arrangement to allow for vertical displacement. Moreover, each leg holder pivotally supports two legs. By the leg holders, it is possible to connect the legs to the relatively thin wire of the wire bracket. The leg holders improve the assembly of the stand because they offer the option of mounting two legs on the holder first and subsequently fixing the unit on the wire bracket.

Preferably, the leg holders are arranged below the joints of the base panel while the coupling element is arranged in the middle between the leg holders. This adds to stability and flexibility of the stand.

The diameter of the wire of the wire bracket elements are dimensioned so as to provide the required spring properties in vertical direction and sufficient mechanical resistance between the reflector arrangement and the stand, in particular in horizontal direction. Accordingly, the diameter of the wire of the wire bracket may be smaller than the diameter of the legs. This also keeps the weight of the warning triangle low.

The leg holders can be secured on substantially U-shaped bends of the wire bracket, which open towards the ground. Accordingly, the leg holders and legs can be inserted from the bottom and will be stably held on the thin wire bracket.

Further, the wire bracket and leg holders may be configured in such manner that in the event of a vertical load exerted on top of the unfolded triangle the leg holders swivel inwardly.

Subsequently, the invention will be described in detail by means of a preferred embodiment as shown in the appended drawings.
- Figure 1: shows a side view of a warning triangle according to the invention in its unfolded state,
- Figure 2: shows a perspective view of a wire element of a wire bracket of the warning triangle shown in figure 1,
- Figure 3: shows a perspective view of an end portion of the wire bracket fixed to a base panel of a reflector arrangement of the warning triangle as shown in figure 1,
- Figure 4: shows a perspective view of a coupling element for a connecting to wire elements as shown in figure 1,
- Figure 5: shows a partial side view of the warning triangle in its folded state, and
- Figure 6: shows a front end in view of the folded warning triangle.

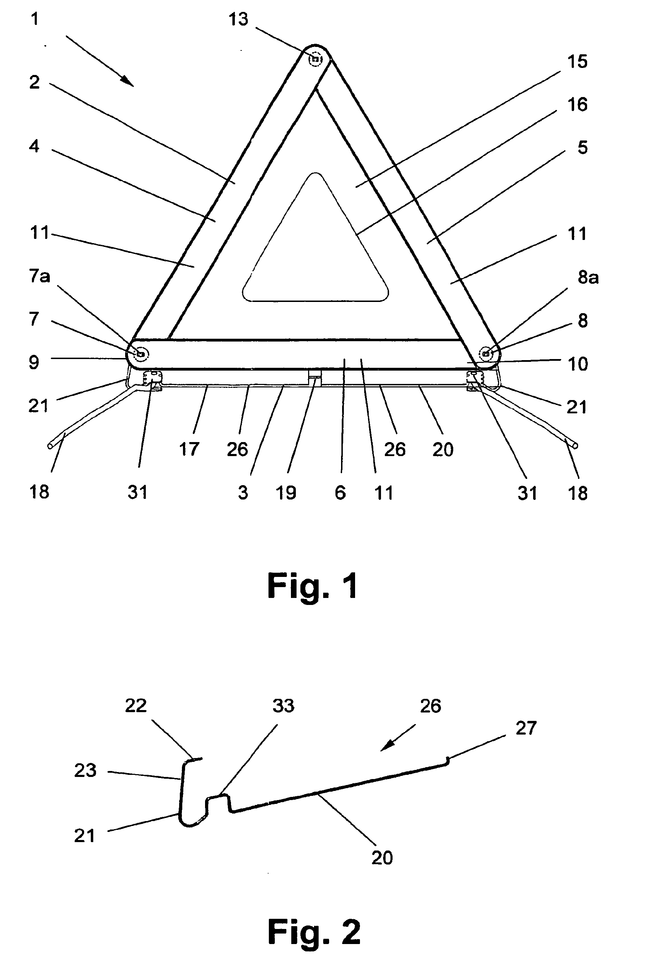

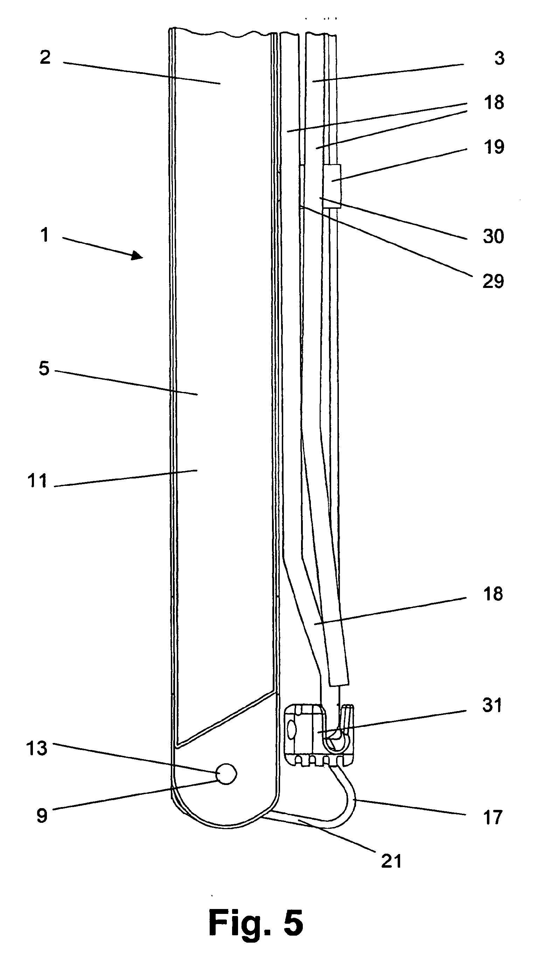

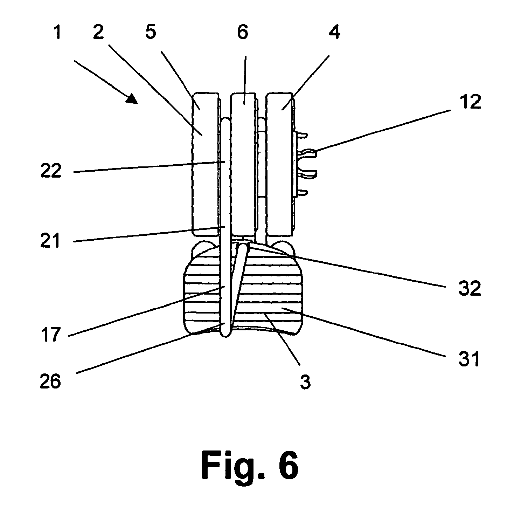

The figures 1 to 6 show a preferred embodiment of a warning triangle 1 which can be folded so as to form a compact package for storing it in a small storage space, e.g. in a motor vehicle. Preferably, the folded triangle 1 is kept in a lengthy box in order to protect it during transport. Figures 5 and 6 show the folded triangle 1 whereas the unfolded state is shown in figure 1.

The warning triangle 1 is constituted by a reflector arrangement 2 and a stand 3 for supporting the reflector arrangement 2 on the ground.

The reflector arrangement 2 comprises two side panels 4 and 5 and a base panel 6 connecting the side panels 4 and 5. Joints 7 and 8 provided at the end portions 9 and 10 of the base panel 6 allow the side panels 4 and 5 to swivel in order to unfold the reflector arrangement 2. In an unfolded state the three panels 4, 5 and 6 form an equal-sided triangle whereas in the folded state the panels 4, 5 and 6 are piled side by side, as can be seen in Figure 5, with the base panel 6 being arranged between the side panels 4 and 5. Each panel 4, 5 or 6 is provided with one reflector element 11. However, it is also possible to provide several reflector elements 11 on one or each of the panels 4, 5 and 6. The reflector elements 11 may be either attached to the panels 4, 5 or 6, for example by vibration welding, or be formed integrally with them.

In order to connect the free ends of the side panels 4 and 5 with each other, one of the side panels 4 has a projection 12, which releasably engages with an opening 13 formed at the end portion of the other side panel 5. The projection 12 is arranged on the rear side of panel 4, which in the folded state of the triangle 1 is arranged behind the base panel 6. When the side panels 4 and 5 are connected with each other, the projection 12 is inserted from the front side (reflecting side) into the opening 13 of the second side panel 5 and subsequently held by a snap connection.

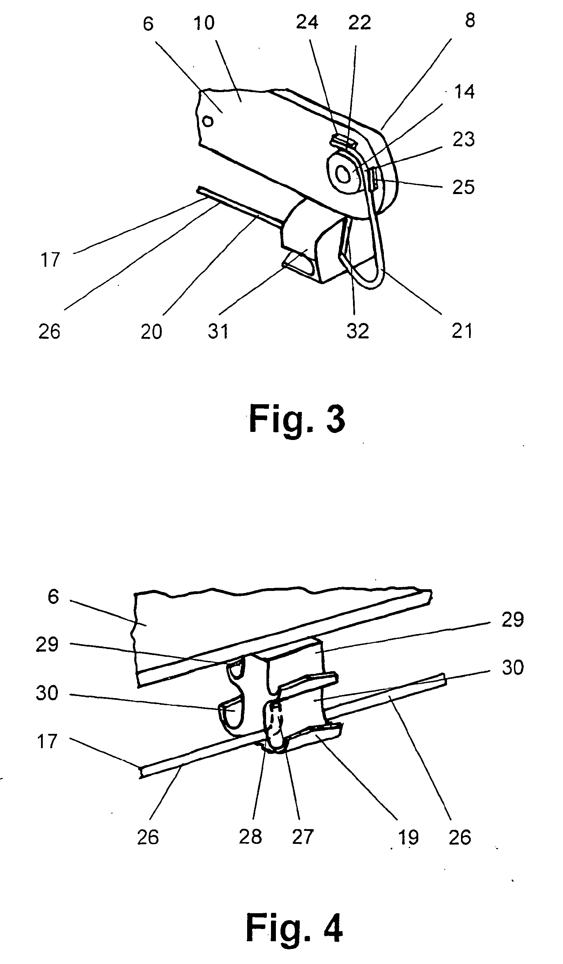

The joints 7 and 8 between the panels 4, 5 and 6 include rivets 7a and 8a inserted from the rear but it is also possible to pivotally connect the panels 4, 5 and 6 in a different manner. However, as shown in figures 3 and 4, each joint 7 and 8 further includes a protrusion 14 to maintain a small axial distance between the respective panels 4 and 6 or 5 and 6, the function of which will be explained hereinafter. In the preferred embodiment, the protrusions 14 are integrally formed with the respective end portions 9 and 10 of the base panel 6.

Further, the reflector arrangement 2 comprises a reflecting sheet 15 which is be visible through the triangular opening formed between the panels 4, 5 and 6 in the unfolded state. The reflecting sheet 15 has a central triangular opening 16 and is fixed on the rear of the panels 4, 5 and 6 by means of the afore-mentioned rivets and further at the projection 12. Preferably, the projection 12 may be formed as a pin or rivet that is secured on the side panel 4 and at the same time secures the top of the reflecting sheet 15.

The stand 3 of the warning triangle 1 comprises vertically elastic means formed by a wire bracket 17, and two pairs of legs 18 pivotally supported on the vertically elastic means, i.e. the wire bracket 17. As shown in figure 1, the wire bracket 17 extends under the reflector arrangement 2 without extending beyond the length of the base panel 6 and is fixed to the reflector arrangement only at the joints 7 and 8 of the base panel 6, whereas the major part of the wire bracket 17 is spaced apart from the lower edge of the base panel 6. However, the wire bracket may also be supported in the middle of the base panel 6 by means of a spacer or coupling element 19. In contrast to conventional warning triangles the present invention does not require a heavy base plate. To the contrary, it uses a relatively thin wire for a lightweight wire bracket 17, which provides a spring effect in a vertical direction and preferably also with respect to a forward and backward movement of the reflector arrangement 2, thus effecting an overall flexibility of the warning triangle 1.

The wire bracket 17 comprises a horizontal portion 20 and two upwardly bent end portions 21 which are secured between the base panel 6 and the side panels 4 or 5. As shown in figure 3, the upwardly bent end portions 21 curve inwardly to form an L-shaped end having two arms 22 and 23. These arms 22 and 23 radially abut the afore-mentioned protrusion 14, which is slightly thicker than the wire at the bent end portions 21. Additional projections 24 and 25 around the protrusion 14 define receptacles in the vicinity of the respective joints 7 and 8 for clamping the L-shaped arms 22 and 23 of the end portions 21 of the wire bracket 17. Accordingly, the wire bracket 17 is secured on the base panel 6 without play.

In the embodiment shown, the wire bracket 17 comprises two separate wire elements 26. These wire elements 26, which are identical in shape, are a connected at second end portions 27 thereof with each other by means of the coupling element 19. The second end portions 27 are bent upwardly and are inserted into openings 28 provided in the bottom side of the coupling element 19. In would be possible, to use a one-piece wire bracket 17 wherein the coupling element 19 is a spacer element only. However, research and tests showed superiority for the structure having two wire elements 26 with regard to stability in the wind test and load test.

As already mentioned, the coupling element 19 is supported on the base panel 6, for example through a snap fit connection. Further, the coupling element 19 is provided with recesses 29 and 30 for retaining the folded legs 18 to keep them spaced apart from each other. The recesses 29 and 30 are arranged on either side of the coupling element 19. In the folded state of the warning triangle 1 the recesses 29 and 30 secure the legs 18 in their position in order to prevent rattling during transport.

The legs 18 are coupled to the wire bracket 17 through leg holders 31. Each leg holder 31 is adapted to pivotally support two legs 18. The two leg holders 31 are fixed on the wire bracket 17 with each leg holder being spaced apart vertically from the base panel 6 of the reflector arrangement 2. As shown in figure 1, the leg holders 31 are arranged below the joints 7 and 8 of the base panel 6. Preferably, the leg holders 31 are formed as blocks of plastics material having two channels for receiving and guiding two legs 18. A groove 32 on top of the block and on its sides is adapted to engage with the wire of the wire bracket 17 in order to secure the leg holders 31 on the wire bracket 17. As shown in figure 2, the wire bracket 17 or its wire elements 26 are formed with substantially U-shaped bends 33 which open towards the ground so that the leg holders 31 can be inserted and fixed from the bottom side. The wire bracket 17 and leg holders 31 are configured in such manner that in the event of a vertical load exerted on top of the unfolded triangle 1 the leg holders 31 swivel slightly towards the centre of the wire bracket 17, i.e. the left leg holder 31 in figure 1 swivels clockwise whereas the right leg holder 31 swivels anticlockwise.

In order to provide a lightweight construction the leg holders 31 and the coupling element 19 are preferably made of light material such as plastics material. However, in order to provide the spring effect the wire bracket 17 and the legs 18 are preferably made of steel. In this connection, it should be noted that the diameter of the wire of the wire bracket 17 is smaller than the diameter of the legs 18.

The warning triangle 1 as described above is light in weight but provides sufficient stability with regard to wind loads and vertical loads. Moreover, it requires little space in its folded state. It is easy to manufacture and can be assembled very efficiently.

However, the invention is not limited the warning triangle of the preferred embodiment but includes all warning triangles as defined in the claims.

### LIST OF REFERENCE NUMERALS

- 1: Warning triangle
- 2: Reflector arrangement
- 3: Stand
- 4: Side panel
- 5: Side panel
- 6: Base panel
- 7: Joint
- 7a: Rivet
- 8: Joint
- 8a: Rivet
- 9: End portion
- 10: End portion
- 11: Reflector element
- 12: Projection
- 13: Opening
- 14: Protrusion
- 15: Reflecting sheet
- 16: Central triangular opening
- 17: Wire bracket
- 18: Leg
- 19: Coupling element
- 20: Horizontal portion
- 21: Upwardly bent end portion
- 22: Arm
- 23: Arm
- 24: Additional projection
- 25: Additional projection
- 26: Wire element
- 27: Second end portion
- 28: Opening
- 29: Recess
- 30: Recess
- 31: Leg holder
- 32: Groove
- 33: U-shaped bend

## Claims

1. Foldable warning triangle, comprising:
- a reflector arrangement (2) having two side panels (4, 5) pivotally joined to end portions (9, 10) of a base panel (6), respectively, and
- a stand (3) fixed to the reflector arrangement (2),
**characterized in that**
the stand (3) is formed by a vertically elastic wire bracket (17) extending under the reflector arrangement (2) and fixed to the reflector arrangement (2) and two pairs of legs (18) pivotally supported on the wire bracket (17), wherein the stand (3) is rigidly fixed to the reflector arrangement (2) and provides a spring effect at the top of the triangle in vertical direction by said wire bracket (17).

2. Foldable warning triangle according to claim 1, **characterized in that** the wire bracket (17) is fixed to the reflector arrangement (2) at joints (7, 8) of the base panel (6).

3. Foldable warning triangle according to claim 2, **characterised in that** the wire bracket (17) comprises two upwardly bent end portions (21) which are secured between two panels (4, 6; 5, 6), respectively, at the joints (7, 8) of these panels (4, 5,6).

4. Foldable warning triangle according to claim 2 or 3, **characterised in that** the base panel (6) is provided with receptacles in the vicinity of its joints (7, 8) for clamping L-shaped arms (22, 23) of the end portions (21) of the wire bracket (17).

5. Foldable warning triangle according to one of claims 1 to 4, **characterised in that** two leg holders (31) are fixed on the vertically elastic means with each leg holder (31) being spaced apart from the base panel (6) of the reflector arrangement (2) and pivotally supporting two legs (18).

6. Foldable warning triangle according to claim 5, **characterised in that** the leg holders (31) are arranged below the joints (7, 8) of the base panel (6) while a coupling element (19) is arranged in the middle between the leg holders (31).

7. Foldable warning triangle according to one of claims 1 to 6, **characterised in that** the wire bracket (17) comprises two separate wire elements (26), the wire (26) elements are a connected with each other by means of a coupling element (19), and the coupling element (19) is supported on the base panel (6) of the reflector arrangement (2).

8. Foldable warning triangle according to one of claims 1 to 7 **characterised in that** the diameter of the wire of the wire bracket (17) is smaller than the diameter of the legs (18).

9. Foldable warning triangle according claim 5 or 6, **characterised in that** the leg holders (31) are secured on substantially U-shaped bends (33) of the wire bracket (17) which open towards the ground.

## Patentansprüche

1. Zusammenklappbares Warndreieck, umfassend:
- eine Reflektoranordnung (2) mit zwei Seitenleisten (4, 5), die jeweils schwenkbar an Endabschnitte (9, 10) einer Stegleiste (6) angekoppelt sind, und
- einen Ständer (3), der an der Reflektoranordnung (2) befestigt ist,
**dadurch gekennzeichnet, dass**
der Ständer (3) durch einen vertikal elastischen Drahtbügel (17) gebildet wird, der unter der Reflektoranordnung (2) verläuft und an der Reflektoranordnung (2) befestigt ist, sowie zwei Paare von Beinen (18), die schwenkbar an dem Drahtbügel (17) gelagert sind, wobei der Ständer (3) starr mit der Reflektoranordnung (2) verbunden ist und durch den Drahtbügel (17) einen Federeffekt an der Spitze des Dreiecks in Vertikalrichtung bereitstellt.

2. Zusammenklappbares Warndreieck nach Anspruch 1, **dadurch gekennzeichnet, dass** der Drahtbügel (17) an der Reflektoranordnung (2) an Gelenken (7, 8) der Stegleiste (6) befestigt ist.

3. Zusammenklappbares Warndreieck nach Anspruch 2, **dadurch gekennzeichnet, dass** der Drahtbügel (17) zwei nach oben gebogene Endabschnitte (21) aufweist, die jeweils zwischen zwei Leisten an den Gelenken (7, 8) dieser Leisten (4, 5, 6) befestigt sind.

4. Zusammenklappbares Warndreieck nach Anspruch 2 oder 3, **dadurch gekennzeichnet, dass** die Stegleiste (6) im Bereich ihrer Gelenke (7, 8) mit Aufnahmen zum klemmenden Halten L-förmiger Arme (22, 23) der Endabschnitte (21) des Drahtbügels (17) versehen ist.

5. Zusammenklappbares Warndreieck nach einem der Ansprüche 1 bis 4, **dadurch gekennzeichnet, dass** zwei Beinhalter (31) an den vertikal elastischen Mitteln festgelegt sind, wobei jeder Beinhalter (31) von der Stegleiste (6) der Reflektoranordnung beabstandet ist und zwei Beine (18) lagert.

6. Zusammenklappbares Warndreieck nach Anspruch 5, **dadurch gekennzeichnet, dass** die Beinhalter (31) unter den Gelenken (7, 8) der Stegleiste (6) angeordnet sind, wobei ein Kopplungselement (19) in der Mitte zwischen den Beinhaltern (31) angeordnet ist.

7. Zusammenklappbares Warndreieck nach einem der Ansprüche 1 bis 6, **dadurch gekennzeichnet, dass** der Drahtbügel (17) zwei separate Drahtelement (26) aufweist, die Drahtelemente (26) miteinander durch ein Kopplungselement (19) verbunden sind, und das Kopplungselement (19) an der Stegleiste (6) der Reflektoranordnung abgestützt ist.

8. Zusammenklappbares Warndreieck nach einem der Ansprüche 1 bis 7, **dadurch gekennzeichnet, dass** der Durchmesser des Drahts des Drahtbügels (17) kleiner als der Durchmesser der Beine (18) ist.

9. Zusammenklappbares Warndreieck nach Anspruch 5 oder 6, **dadurch gekennzeichnet, dass** die Beinhalter (31) an im wesentlichen U-förmigen Biegungen (33) des Drahtbügels (17), die zum Boden hin öffnen, befestigt sind.

## Revendications

1. Triangle de signalisation pliable comprenant:
- un arrangement de réflecteur (2) ayant deux panneaux latéraux (4, 5) articulés en pivotant respectivement à des portions d'extrémité (9, 10) d'un panneau de base (6) et
- un support (3) fixé à l'arrangement de réflecteur (2),
**caractérisé en ce que**
le support (3) est formé par une console en fil (17) élastique verticalement qui s'étend en dessous de l'arrangement de réflecteur (2) et qui est fixée à l'arrangement de réflecteur (2) et par deux paires de pieds (18) supportés en pivotant sur la console en fil (17), dans lequel le support (3) est fixé rigidement à l'arrangement de réflecteur (2) et fournit un effet de ressort au sommet du triangle dans le sens vertical par la console en fil (17).

2. Triangle de signalisation pliable selon la revendication 1, **caractérisé en ce que** la console en fil (17) est fixée à l'arrangement de réflecteur (2) à des joints (7, 8) du panneau de base (6).

3. Triangle de signalisation pliable selon la revendication 2, **caractérisé en ce que** la console en fil (17) comprend deux portions d'extrémité recourbées vers le haut (21) qui sont fixées respectivement entre deux panneaux (4, 6 ; 5, 6) aux joints (7, 8) de ces panneaux (4, 5, 6).

4. Triangle de signalisation pliable selon la revendication 2 ou 3, **caractérisé en ce que** le panneau de base (6) est équipé de logements au voisinage de ses joints (7, 8) pour serrer des bras en forme de L (22, 23) des portions d'extrémité (21) de la console en fil (17).

5. Triangle de signalisation pliable selon l'une des revendications 1 à 4, **caractérisé en ce que** deux supports de pieds (31) sont fixés sur les moyens élastiques verticalement, chaque support de pied (31) étant espacé du panneau de base (6) de l'arrangement de réflecteur (2) et supportant en pivotant deux pieds (18).

6. Triangle de signalisation pliable selon la revendication 5, **caractérisé en ce que** les supports de pieds (31) sont arrangés en dessous des joints (7, 8) du panneau de base (6) tandis qu'un élément de couplage (19) est arrangé au milieu entre les supports de pieds (31).

7. Triangle de signalisation pliable selon l'une des revendications 1 à 6, **caractérisé en ce que** la console en fil (17) comprend deux éléments en fil séparés (26), les éléments en fil (26) étant reliés l'un à l'autre au moyen d'un élément de couplage (19) et l'élément de couplage (19) étant supporté sur le panneau de base (6) de l'arrangement de réflecteur (2).

8. Triangle de signalisation pliable selon l'une des revendications 1 à 7, **caractérisé en ce que** le diamètre du fil de la console en fil (17) est inférieur au diamètre des pieds (18).

9. Triangle de signalisation pliable selon la revendication 5 ou 6, **caractérisé en ce que** les supports de pied (31) sont fixés sur des coudes essentiellement en forme d'U (33) de la console en fil (17) qui s'ouvrent vers le sol.
